# EUROPEAN PATENT SPECIFICATION

(11) **EP 1 534 041 B1**
(45) Date of publication and mention of the grant of the patent: **07.03.2012**
(21) Application number: 04256613.3
(22) Date of filing: 27.10.2004
(51) Int. Cl.: H04W 4/12, H04L 12/58, H04W 4/18, H04W 92/02, H04W 88/18

(54) **Delivering of e-mail messages to a mobile subscriber**
Übermittlung von E-mailnachrichten zu einem mobilen Teilnehmer
Distribution de messages E-mail à un abonné mobile

(30) Priority: 19.11.2003 GB 0326972
(43) Date of publication of application: 25.05.2005
(73) Proprietor: Vodafone Group PLC, Newbury Berkshire RG14 2FN (GB)
(72) Inventor: Bryant, Christopher, Southampton, Hampshire SO17 3RQ (GB); Bate, Paul, Thatcham RG18 3BZ (GB)
(74) Representative: Harries, Simon George

(56) References cited:
- EP-A- 1 176 773
- GB-A- 2 381 998
- W. RICHARD STEVENS: "TCP/IP Illustrated, Volume 1 - The Protocols" July 1999 (1999-07), ADDISON-WESLEY , READING, USA , XP002531660 * page 441 - page 459 *

## Description

The present invention relates to a method of transmitting email messages using a mobile telecommunication system, a method of allowing a subscriber of a mobile telecommunications system to receive messages, a method of transmitting an email to a subscriber of a mobile telecommunications network and apparatus for transmitting email messages using a mobile telecommunications network.

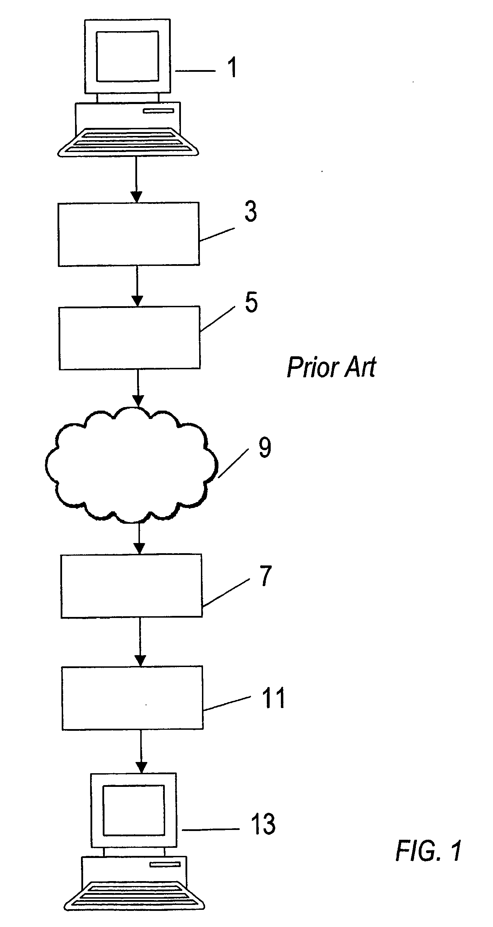

A conventional method of sending an email will be briefly described with reference to Figure 1. The user of personal computer (PC) 1 composes the message content portion of that email using a program such as Microsoft (rtm) Outlook. The message content may comprise text and/or "attachments" of documents or programs in a multiplicity of formats, such as a word processing document or a pdf document. The email, in addition to the message portion, also includes a message recipient identifier portion - the address to which the email is to be sent. The current naming convention used for addressing emails employs the X500 standard. According to this convention, a typical email address has the format mail@vodafone.com. "Mail" is the user name, and "Vodafone.com" is the host or domain name.

In Figure 1, PC 1 is part of a large corporate network of computers. When the user sends the addressed and composed email from PC 1, this email is passed to a store 3. The email is then transmitted to a Simple Mail Transfer Protocol (SMTP) gateway 5. The SMTP gateway 5 analyses the recipient identifier portion (particularly the domain name) of the email and forwards the email to the recipient's email Post Office Protocol (POP) gateway 7. The messages between SMTP server 5 and POP server 7 are transmitted via the Internet 9. The POP gateway 7 then transmits the email to a store 11 from which the email recipient - the user of PC 13 - can access the email.

Providing and maintaining the email stores 3 and 11 and the SMTP and POP servers 5 and 7 involves a considerable amount of work. Further, because emails are typically stored in stores 3 and 11 for an indefinite or long period of time, and because the emails are addressable in the stores 7 and 11, these stored emails are vulnerable to being accessed by unauthorised persons.

WO-A-03/083691 discloses an arrangement for sending email-type messages to a mobile device.

GB2381998 describes a technique of forwarding email messages to a mobile terminal using SMS messages. EP 1176773 also describes a technique of forwarding email messages to a mobile terminal whereby email data is reconfigured in order to not exceed the data capacity of the receiving mobile terminal. Further, "TCP/IP Illustrated, Volume 1 - The Protocols", XP002531660, provides general information on the TCP/IP protocol.

The invention is carried out by the method of claim 1 and the system of claim 21.

For a better understanding of the present invention, embodiments will now be described by way of example, with reference to the accompanying drawings, in which:
Figure 1 shows schematically the prior art arrangement for sending an email between two PCs which are in different domains;
Figure 2 shows schematically the elements of a mobile telephone network in accordance with an aspect of the present invention;
Figure 3 shows schematically an arrangement for sending an email from a PC in one domain to a mobile device or PC authenticated with the mobile network in a different domain in accordance with an aspect of the present invention;
Figure 4 shows schematically the arrangement for sending an email from a mobile device or a PC authenticated with the mobile network in one domain to a PC in a different domain in accordance with an aspect of the present invention;
Figure 5 shows schematically an arrangement for sending an email from a mobile device or a PC authenticated with the network to another mobile device or a PC authenticated with the network; and
Figure 6 shows schematically the processing of emails by the mobile telecommunications network.

In the drawings, like elements are generally designated with the same reference numerals.

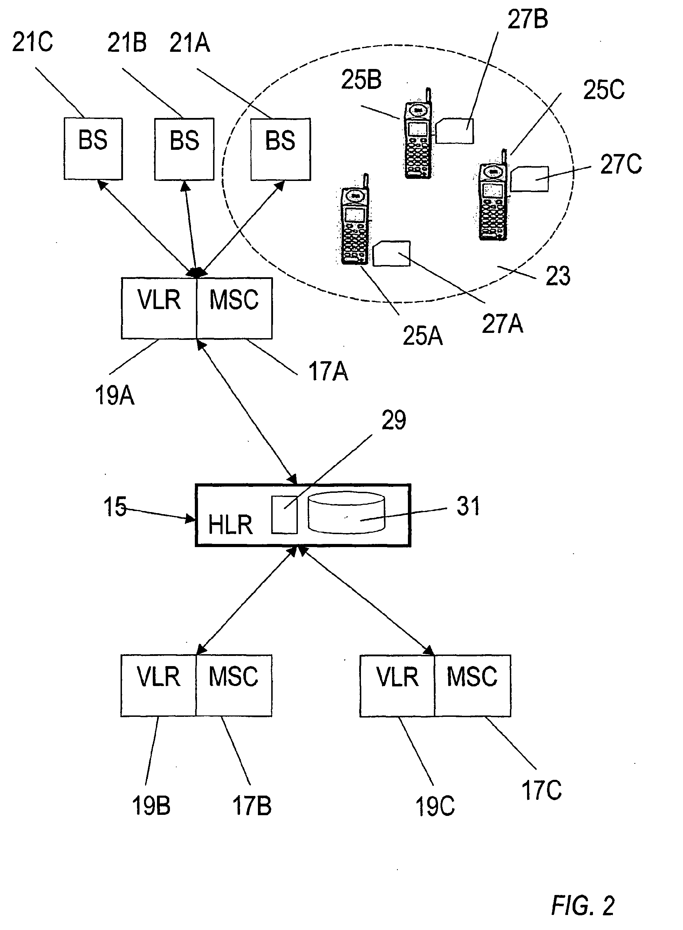

In Figure 2 the elements of a mobile or cellular telecommunications network are shown. The mobile telephone network shown in Figure 2 is a GSM network, although it should be appreciated that the present invention is applicable to other types of mobile telecommunications networks, such as 3G or UMTS networks.

The network comprises a Home Location Register (HLR) 15 which stores information relating to each subscriber of the network. The HLR 15 stores the subscriber's telephone number within the network, the International Mobile Subscriber Identification (IMSI), information useful for authentication purposes, and other data.

The network also includes several Mobile Switching Centres (MSCs) 17A,17B and 17C, each of which includes a respective Visitor Location Register (VLR) 19A,19B and 19C. Each MSC controls a number of base stations to which it is connected by a cable or wireless connection. As shown in Figure 2, MSC 17A controls base stations 21A,21B and 21C. Each base station transmits and receives radio signals within a respective geographical area or cell in which mobile devices may be located. Figure 2 shows the cell 23 associated with base station 21A, and also shows three mobile devices (such as mobile telephones) 25A,25B and 25C located in the cell 23. Each mobile device 25A,25B and 25C has a smart card or Subscriber Identity Module (SIM) 27A,27B or 27C associated with it.

For clarity, the base stations for MSCs 17B and 17C are not shown, and neither are the cells for the base stations 21B and 21C. In practice, of course, a network of reasonable size will have many more than three MSCs and may have more than one HLR.

Each mobile device is activated by means of its SIM, each SIM being particular to one subscriber and carrying information identifying that subscriber including the subscriber's IMSI, an encryption algorithm, authentication data and other data. It is possible for one subscriber to have more than one SIM.

When mobile device 25A, with which SIM 27A is associated, is powered up within the cell 23, a radio signal is transmitted to the base station 25A and passed to MSC 17A. The MSC 17A checks whether the subscriber's details are currently stored in the VLR 19A. If they are not, the MSC 17A interrogates the HLR 15 using the subscriber's IMSI to access the data stored in the HLR 15 relating to that subscriber.

In response to this interrogation, the HLR 15 will transmit authentication data to the MSC 17A in "challenge" and "response" forms. Using this data, MSC 17A passes a "challenge" to the mobile device 25A through base station 21A. Upon receipt of this data, the mobile device 25A passes this data to its SIM 27A and produces a "response". This response is generated using the encryption algorithm on the SIM 27A and a unique key Ki on the SIM 27A. The response is transmitted back to the MSC 17A which checks it against its own information for that subscriber in order to complete the authentication process. If the response from the mobile device 25A is as expected, the mobile device 25A is deemed authenticated. The MSC 17A then requests subscription data on the HLR 15 accordingly. The HLR 15 then passes the subscription data to the VLR 19A where it is stored, this data including information defining the type of service which may be provided to the subscriber (for example, according to the level of the subscriber's subscription). Mobile device 25A is now registered with MSC 17A and can make and receive calls and send and receive data and SMS messages, in the normal way via base station 21A and MSC 17A.

Mobile device 25A can also be used when in cells controlled by other base stations (21B and 21 C) associated with MSC 17A, using the same information already stored in VLR 19A.

In addition, the current location of mobile device 25A is stored in the HLR 15.

Incoming calls to the network intended for the subscriber can therefore be directed by the HLR 15 to the MSC 17A and thence to mobile device 25A. Such calls are directed to the MSC 17A and thence to the mobile device 25A by means of the subscriber's public telephone number.

The authentication process described above will be repeated at regular intervals while the mobile device 25A remains activated and can also be repeated each time the mobile device 25A makes or receives a call.

If the mobile device 25A moves into a cell controlled by a base station associated with one of the other MSCs 17B and 17C, the registration process described above is repeated, in order that the subscriber's details are transferred by the HLR 15 into the appropriate VLR (17B or 17C). The subscriber's data previously stored in VLR 19A is then deleted.

Thus far, what has been described is conventional.

In accordance with an aspect of the present invention, the HLR 15 further includes a queue 29 for temporarily storing emails prior to forwarding of those emails to the intended recipient and a Global Address List (GAL) 31. The queue 29 and the GAL 31 are provided to allow the HLR 15, and consequently the network as a whole, to process emails originating from subscribers to the network and for delivering emails to subscribers of the network.

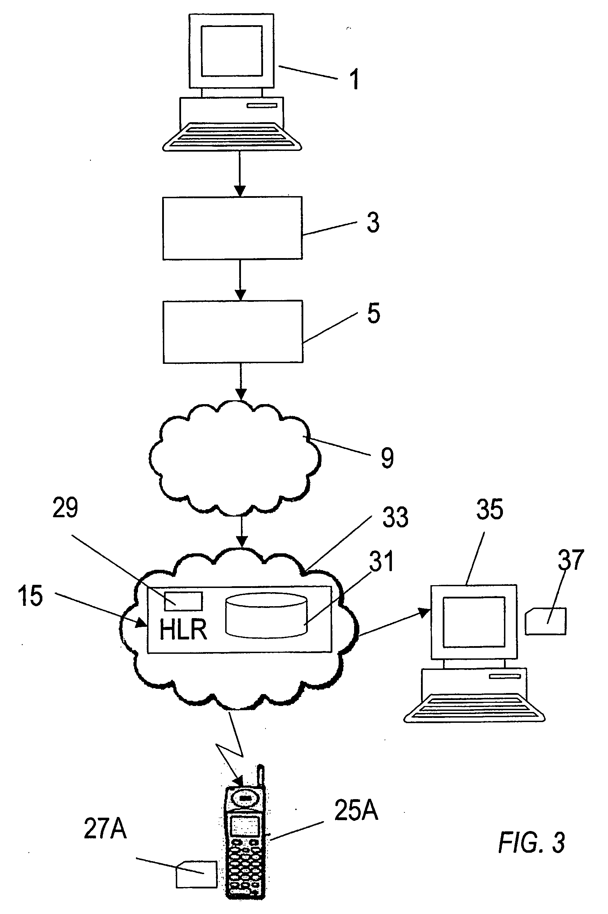

The procedure by which an email message originating from PC 1, which has no association with the network and is in a different domain to this network, is transmitted to the mobile device 25A will now be described with reference to Figure 3.

The user of PC 1 prepares an email including a content portion and a message recipient identifier portion in the same manner as described in relation to the prior art above. This email message is stored by store 3 and then passed to SMTP gateway 5. The domain name part of the recipient identifier portion indicates to the SMTP gateway 5 that the message is an email message intended for a Vodafone (rtm) subscriber in the Vodafone domain. The email is then passed by a suitable communication medium, such as the Internet 9, to the Vodafone network 33. The email is then passed to the HLR 15. The message recipient identifier of the email is then analysed. The user name part of the message recipient identifier portion is compared with known user names of subscribers to the network stored on the GAL 31. If an entry is present in the GAL 31 which corresponds to the user name, the data associated with that entry is retrieved. This data will include the IMSI of the subscriber corresponding to the user name portion of the message identifier portion of the email. Thus, the GAL 31 includes a mapping of user names within the "Vodafone.com" domain to the corresponding IMSI of the relevant subscriber, thereby allowing translation of the user name associated with a subscriber to an IMSI associated with that subscriber, and vice versa. The entry for a subscriber in the GAL 31 may also include other data specific to that subscriber, which will be described in more detail below.

If there is an appropriate entry in the GAL 31, the HLR 15 modifies the email by removing the message identifier portion and replacing this with the IMSI of the subscriber for which the email is intended. This email is then passed to the queue 29. The queue 29 is a non-addressable store and is a linear, unmanaged, first in, first out queue. As other emails ahead in the queue are delivered, the email originating from PC 1 will progress up the queue until it reaches the top of the queue. When the email is released from the queue 29 it is passed, using the IMSI, to the MSC 17A within the network 33 with which it is recorded by the HLR 15 that the destination mobile device 25A of the relevant subscriber is registered. The MSC 17A then routes the email to the appropriate BS 21A and the email is transmitted wirelessly to the mobile device 25A - for example as GPRS data.

When the email leaves the queue 29 no record of the message content remains with the queue 29 and HLR 15 (or elsewhere on the network 33). The email is not stored permanently or for an extended period of time, in contrast to the prior art described in relation to Figure 1. The email is held in the queue 29 for the time it takes to progress from the bottom of the queue 29 to the top. However, even when stored in the queue 29 it will be difficult or impossible for an unauthorised person to access a particular subscriber's email because the emails are not addressable in the queue 29.

Also, there is no POP gateway 11. The emails are routed to the subscriber of the network 33 using the IMSI determined according to the GAL 31.

Although the email is not itself stored, a record is likely to be made that the email has been forwarded to the subscriber so that, for example, the subscriber can be charged for use of the service by debiting an appropriate amount from the subscriber's account with the network 33.

The arrangement described in relation to Figure 3 may, in addition to transmitting an email to a subscriber's mobile device 25A, also transmit an email to a data processing device, such as a subscriber's PC 35 if that data processing device is authenticated with the network. For example, to authenticate a subscriber's PC 35 with the network 33, the PC 35 may be adapted to receive a SIM 37. The SIM 37 may be removably fitted to the PC, for use in identifying the subscriber (that is, the holder of the SIM) or may be fixed within the PC 35 (for identifying the PC itself). The PC 35 incorporates transaction manager software which interacts with and controls some of the functions of the SIM - for example as described in our publication WO-A-2004/036513.

As an alternative to the SIM being removably fitted, or permanently fitted, to the PC 35, the SIM 37 could be associated with the PC35 in any way that allows communication between the SIM 37 and the PC 35. For example, the SIM could be provided with a "dongle" which allows wired or wireless communication between the SIM 37 and the PC35 (also as described in publication WO-A-2004/036513).

The SIM 37 includes authentication data corresponding to the SIM 27A and allows the PC 35 to be authenticated with the network 33 by a data exchange with the network 33 in a similar manner to the way in which the mobile device 25A is authenticated with the network 33. However, the challenge and response data required for authentication ofthe PC35 do not necessarily have to be transmitted wirelessly using the mobile network 33.

The challenge and response data may be transmitted by a fixed link or via the Internet. In any event, the challenge and response are communicated between the HLR 15 of the network 33 and the SIM 37 (via the PC 35) in order that the PC 35 can be properly authenticated with the network 33. Similarly, an email addressed to the subscriber with which the SIM 37 is associated is not necessarily transmitted to the PC 35 wirelessly using the network 33. The email destined for the subscriber holding SIM 37 is processed by the GAL 31 and queue 29 in the same manner as described above. However, when the email reaches the top of the queue, instead of being transmitted wirelessly to the subscriber using the network 33, the email may be transmitted using the fixed telephone network and/or the Internet and is addressed to the PC 35 using the IMSI stored on the SIM 37 - for example by means of a suitable Internet protocol such as SOAP over http.

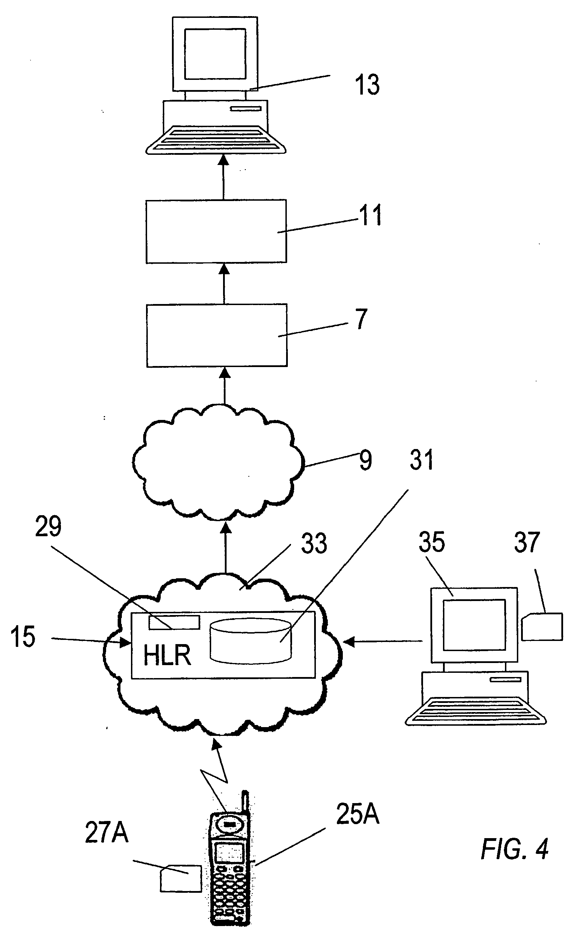

The procedure by which a subscriber of network 33 is able to send an email to a PC 1 which is not authenticated with the network 33 will now be described with reference to Figure 4. An email will be generated by the mobile terminal 25A or PC 35 which is authenticated with the network 33 in a conventional manner. That is, the email will comprise a message portion and/or "attachments", and a message recipient identifier portion. The message recipient identifier portion will comprise a user name and a domain name in accordance with the X500 standard. The email is therefore of the format of a conventional email. The email is passed to the network 33 either wirelessly if originating from the mobile device 25A or via a fixed link and/or the Internet if originating from the PC 35 (for example by SOAP over http) and is received by the HLR 15. The GAL 31 registers that the email is not for a subscriber within the Vodafone network. The recipient identifier portion is therefore left unaltered. The email then progresses along the queue 29, as described above. Because the email is not for a subscriber in the Vodafone domain, the email is then forwarded by the HLR 15 to the POP server 7 associated with the domain name, and the email is then stored in store 11, whereafter it can be accessed by the user of PC 13. The HLR 15 may include software emulating a SMTP gateway (a "virtual SMTP gateway") to perform this forwarding process.

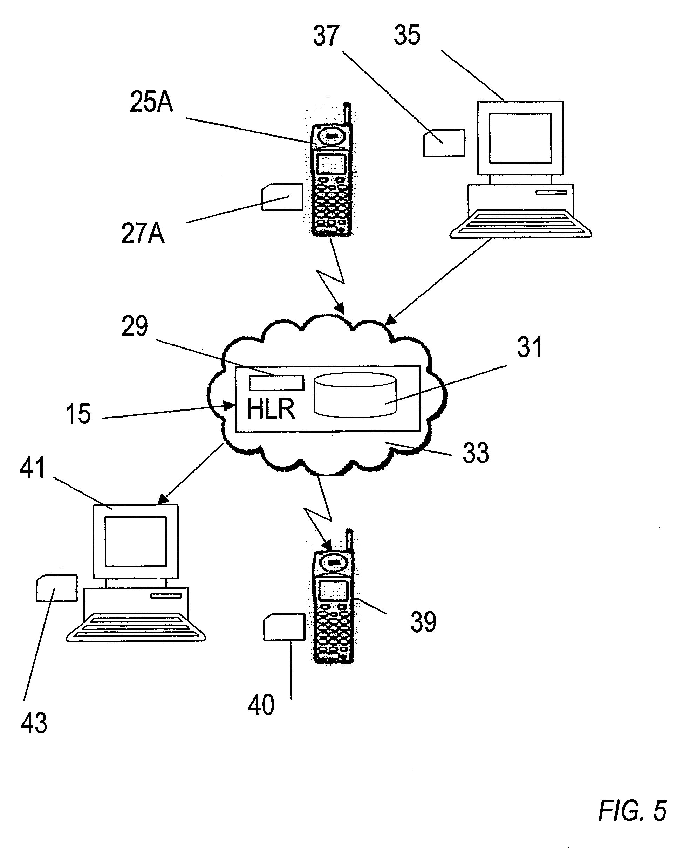

Figure 5 shows an alternative arrangement where a subscriber of the network 33 wishes to send an email to another subscriber of the network 33. (that is, a subscriber in the Vodafone domain) In this example the subscriber of mobile terminal 25A or PC 37 (which is authenticated with the network using the subscriber's SIM 37) prepares an email message in the manner described in relation to Figure 4. As before, this email is forwarded to the HLR 15. The email may be transmitted by the mobile terminal using the wireless network 33 or may be transmitted by the PC 37 using a suitable Internet protocol such as SOAP over http.

The email message recipient identifier portion will include the domain "Vodafone.com" indicating to the HLR that this is a message intended for a subscriber of the network 33. The user name from the message portion of the email is then compared to entries in the GAL 31 to determine whether there is an entry in the GAL 31 corresponding to the user name. If there is an entry corresponding to the user name, the IMSI corresponding to the user name is retrieved and is attached to the message content portion of the email in place of the message recipient identifier portion. The email then enters the queue 29, and when the email reaches the end of the queue, it is delivered by the HLR 15 to the appropriate MSC and BS whereafter it is wirelessly transmitted to the recipient subscriber's mobile terminal 39 and associated SIM 40. Alternatively, if the recipient is a PC 41, authenticated with the network 33 by means of the subscriber's SIM 43, but which does not communicate wirelessly with the network 13, the email is transmitted by means of an appropriate Internet protocol such as SOAP over http.

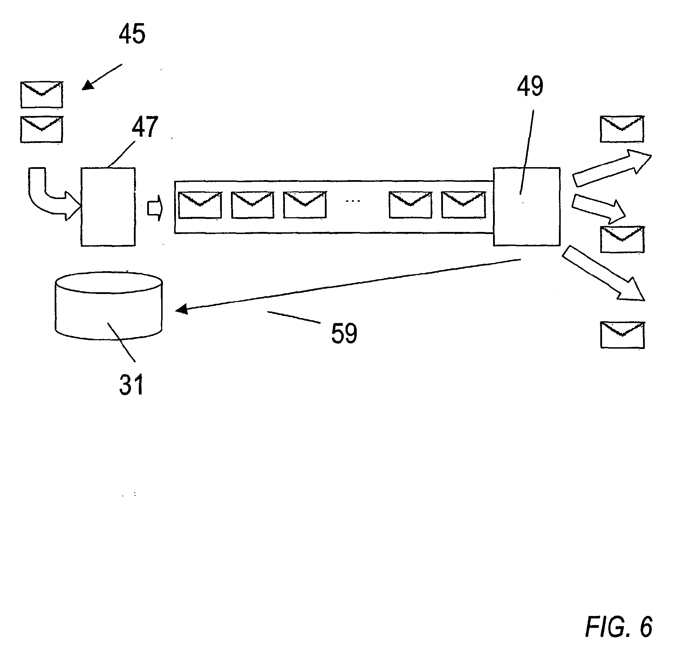

The processing of emails within the HLR 15 will be described in more detail with reference to Figure 6. Incoming emails 45 are received from subscriber's of the network 33 and from other sources or domains. Each email is passed to a network access transaction gateway 47 which extracts the recipient identifier portion from the email and determines whether the email is intended for a subscriber of the network 33 (i.e. whether it is addressed to the Vodafone domain). If the email is not addressed to a subscriber of the network 23, the recipient identifier portion is left unaltered. If the email is addressed to a subscriber of the network 33, the network access transaction gateway 47 determines whether the user name from the recipient identifier portion is present in the GAL 31. If the user name is present in the GAL 31, the data associated with that entry is retrieved. The IMSI associated with the user name is attached (in place of the original recipient identifier portion) to the message content portion of the email. Further, the data retrieved from the GAL 31 may include other information such as the "policy" by which a subscriber wishes to have their emails delivered. For example, the subscriber may indicate to which device they want their email delivered, in dependence upon various criteria - for example, the nature or size of the email, the time of day or their connection status with the network 33. For example, the email may be split into parts, such as the message body and attachments, and the parts sent to different or multiple destinations. This will allow an email with a large attachment to be delivered in summary to a mobile telephone (such as the first one hundred characters of the message, with the attachment re-rendered to suit the small screen limited bandwidth of the mobile telephone). The same email may be transmitted in full to the user's PC which is authenticated with the network by means of the user's SIM.

This allows a user to receive emails by multiple devices authenticated with the network. Particular groups of users may have a policy which applies to all messages for that group. The emails will be addressed according to the policy data stored for that subscriber in the GAL 31. If the user name in the recipient identifier portion of the email is not present in the GAL 31, the recipient identifier portion is left unaltered.

The email is then passed to the queue 29. The emails are released from the queue 29 on a first in, first out basis. The emails are released when the recipient is available and in dependence upon the rate at which the recipient can receive messages. When an email reaches the top of the queue 29 it is processed by a policy-based delivery manager and optimiser 49. The policy-based delivery manager and optimiser 49 may at this time check details of the policy for that email with the GAL 31, as indicated by arrow 59. The policy based delivery manager and optimiser 49 then routes each email according to the recipient identifier portion. If the recipient identifier portion corresponds to the IMSI of subscriber's mobile terminal, the email is routed to that terminal via the appropriate MSC and BS with which that mobile terminal is currently registered. Such emails can be transmitted wirelessly from the appropriate BS to the subscriber's mobile terminal. If the message is addressed to the subscriber's PC, which is authenticated with the network 33 using the subscriber's SIM, this message can be delivered to the PC using a suitable Internet protocol such as SOAP over http. If the user identity data indicates that the recipient is not a subscriber to the network 33, and is in a different domain, then this email is forwarded (for example by means of a virtual SMTP gateway in the network) via the Internet to the appropriate POP gateway for the recipient's domain. Such an email is then stored in the conventional manner in the store of the destination domain, whereafter it can be accessed by the recipient's PC.

Emails transmitted between the HLR and subscribers to the network may be encrypted. Data present on a subscriber's SIM allows encryption of data transmitted to the network and decryption of data received from the network.

Individual emails in the queue cannot be accessed and read. This reduces the likelihood of the content of the emails being obtained by unauthorised persons.

It should be understood that the queue 29, GAL 31, transaction gateway 47 and policy-based optimiser 49 do not have to be provided in the HLR 15. Instead, these components (or selected ones of them) could be provided in another part of the network 33, or may not be provided in the network 33 at all. For example, the queue 29 might be provided by a third party, and may or may not be controlled by the network 33.

## Claims

1. A method of transmitting an email message to a subscriber of a mobile telecommunications network (33), the method including:
receiving the email message originating from a sender (1;25A;37) and addressed to a recipient (25A,35;39,41), such that the recipient is the subscriber of the mobile telecommunications network (33);
**characterized by**
modifying the received email message by converting an address portion into a network address used for identifying the subscriber in the mobile telecommunications network to provide a modified email message,
storing the modified email message in a queue (29), and
using the network address in the address portion of the modified email message to forward the modified email message from the queue (29) to the subscriber (25A,35;39,41) in the mobile telecommunications network using a packet data protocol.

2. The method of claim 1 wherein the queue comprises a non-addressable store, so that email messages are not addressable when stored in the queue.

3. The method of claim 1 or 2, wherein the queue (29) comprises a linear queue.

4. The method of claim 1, 2 or 3, wherein the queue (29) comprises an unmanaged queue.

5. The method of claim 1, 2, 3 or 4, wherein the queue (29) comprises a first in, first out queue.

6. The method of any one of the preceding claims, wherein the queue (29) forwards email messages to the recipient (25A, 35; 39, 41) in dependence upon the rate at which the recipient (25A, 35; 39, 41) can receive email messages.

7. The method of any one of the preceding claims, wherein the queue (29) forwards email messages to the recipient in dependence on the availability of the recipient (25A, 35; 39, 41) to receive messages.

8. The method of any one of the preceding claims, wherein the email message is forwarded directly from the queue (29) to the recipient without being held in an intermediate store.

9. The method of any one of the preceding claims, wherein the email message is received from the sender and stored in the queue without being held in an intermediate store.

10. The method of any one preceding claim, including performing said modification step in the home location register (15) of the network (33).

11. The method of claim 1 or 10, wherein the network address comprises the subscriber's IMSI.

12. The method of claim 1, 10 or 11, wherein the address portion of the email message is an X 500 address or the like.

13. The method of claim 1, 10, 11 or 12, wherein the address portion of the email message comprises a user name and a domain name.

14. The method of any one of the preceding claims, wherein the subscriber has a plurality of devices registered with the network (33), and wherein the method includes forwarding the email messages to a selected one of the devices.

15. The method of claim 14, wherein the selected one of the devices is selected in dependence upon the content of the email message.

16. The method of claim 14 or 15, wherein the selected one of the devices is selected in dependence upon criteria determined by the subscriber.

17. The method of claim 14, 15 or 16, including altering the content of the email message in dependence upon the selected one of the devices to which it is to be forwarded.

18. The method of any one of the preceding claims, wherein the network (33) comprises a GSM network.

19. The method of any one of the preceding claims, wherein the network (33) comprises a 3G or UMTS network.

20. The method of any one of the preceding claims, wherein the sender (1; 25A; 37) and the recipient (25A, 35; 39, 41) of the email message are both subscribers of the network (33) and are authenticated with the network (33).

21. A mobile telecommunications network (33) including:
means for receiving email messages addressed to a recipient (25A,35;39,41) such that the recipient is a subscriber of the mobile telecommunications network (33),
**characterized by**,
means adapted to modify the received email messages by converting an address portion into a network address used for identifying the subscriber in the mobile telecommunications network to provide modified email messages,
means adapted to store the modified email messages in a queue (29), and
means adapted to use the network address in the address portion of the modified email messages to forward the email messages from the queue (29) to the subscriber (25A,35;39,41) in the mobile telecommunications network using a packet data protocol.

22. The mobile telecommunications network of claim 21, including means for performing the method of any one of claims 2 to 20.

23. A method of claim 1 wherein the network address comprises an IMSI of the recipient's terminal, and, the method further includes:
receiving the modified email at the mobile telecommunications network (33);
analysing the address portion of the email to determine the IMSI of the recipient's terminal; and
transmitting a message content portion to the recipient (25A, 35; 39, 41) using the determined IMSI.

## Patentansprüche

1. Verfahren zum Senden einer Email-Nachricht zu einem Teilnehmer eines mobilen Telekommunikationsnetzes (33), wobei das Verfahren Folgendes beinhaltet:
Empfangen der von einem Sender (1; 25A; 37) stammenden und an einen Empfänger (25A, 35; 39, 41) adressierten Email-Nachricht, so dass der Empfänger der Teilnehmer des mobilen Telekommunikationsnetzes (33) ist;
**gekennzeichnet durch**
Modifizieren der empfangenen Email-Nachricht **durch** Konvertieren eines Adressteils in eine Netzwerkadresse, die zum Identifizieren des Teilnehmers in dem mobilen Telekommunikationsnetz verwendet wird, um eine modifizierte Email-Nachricht bereitzustellen,
Speichern der modifizierten Email-Nachricht in einer Warteschlange (29), und
Verwenden der Netzwerkadresse im Adressteil der modifizierten Email-Nachricht zum Weiterleiten der modifizierten Email-Nachricht von der Warteschlange (29) zum Teilnehmer (25A, 35; 39, 41) in dem mobilen Telekommunikationsnetz mit einem Paketdatenprotokoll.

2. Verfahren nach Anspruch 1, wobei die Warteschlange einen nicht adressierbaren Speicher umfasst, so dass Email-Nachrichten nicht adressierbar sind, wenn sie in der Warteschlange gespeichert sind.

3. Verfahren nach Anspruch 1 oder 2, wobei die Warteschlange (29) eine lineare Warteschlange umfasst.

4. Verfahren nach Anspruch 1, 2 oder 3, wobei die Warteschlange (29) eine unverwaltete Warteschlange umfasst.

5. Verfahren nach Anspruch 1, 2, 3 oder 4, wobei die Warteschlange (29) eine FIFO-(First In, First Out)-Warteschlange umfasst.

6. Verfahren nach einem der vorherigen Ansprüche, wobei die Warteschlange (29) Email-Nachrichten zum Empfänger (25A, 35, 39, 41) in Abhängigkeit von der Geschwindigkeit weiterleitet, mit der der Empfänger (25A, 35, 39, 41) Email-Nachrichten empfangen kann.

7. Verfahren nach einem der vorherigen Ansprüche, wobei die Warteschlange (29) Email-Nachrichten zum Empfänger in Abhängigkeit von der Verfügbarkeit des Empfängers (25A, 35, 39, 41) zum Empfangen von Nachrichten weiterleitet.

8. Verfahren nach einem der vorherigen Ansprüche, wobei die Email-Nachricht direkt von der Warteschlange (29) zum Empfänger weitergeleitet wird, ohne in einem Zwischenspeicher gehalten zu werden.

9. Verfahren nach einem der vorherigen Ansprüche, wobei die Email-Nachricht vom Sender empfangen und in der Warteschlange gespeichert wird, ohne in einem Zwischenspeicher gehalten zu werden.

10. Verfahren nach einem der vorherigen Ansprüche, bei dem die Ausführung des genannten Modifikationsschritts im HLR (Home Location Register) (15) des Netzwerks (33) erfolgt.

11. Verfahren nach Anspruch 1 oder 10, wobei die Netzwerkadresse die IMSI des Teilnehmers umfasst.

12. Verfahren nach Anspruch 1, 10 oder 11, wobei der Adressteil der Email-Nachricht eine X 500 Adresse oder dergleichen ist.

13. Verfahren nach Anspruch 1, 10, 11 oder 12, wobei der Adressteil der Email-Nachricht einen Benutzernamen und einen Domänennamen umfasst.

14. Verfahren nach einem der vorherigen Ansprüche, wobei der Teilnehmer mehrere Geräte bei dem Netzwerk (33) registriert hat und wobei das Verfahren ferner das Weiterleiten der Email-Nachrichten zu einem ausgewählten einen der Geräte beinhaltet.

15. Verfahren nach Anspruch 14, wobei das ausgewählte eine der Geräte in Abhängigkeit vom Inhalt der Email-Nachricht ausgewählt wird.

16. Verfahren nach Anspruch 14 oder 15, wobei das ausgewählte eine der Geräte in Abhängigkeit von vom Teilnehmer bestimmten Kriterien ausgewählt wird.

17. Verfahren nach Anspruch 14, 15 oder 16, das das Verändern des Inhalts der Email-Nachricht je nach dem ausgewählten einen der Geräte beinhaltet, zu dem sie weitergeleitet werden soll.

18. Verfahren nach einem der vorherigen Ansprüche, wobei das Netzwerk (33) ein GSM-Netzwerk umfasst.

19. Verfahren nach einem der vorherigen Ansprüche, wobei das Netzwerk (33) ein 3G- oder UMTS-Netzwerk umfasst.

20. Verfahren nach einem der vorherigen Ansprüche, wobei der Sender (1, 25A, 37) und der Empfänger (25A, 35, 39, 41) der Email-Nachricht beide Teilnehmer des Netzwerks (33) und bei dem Netzwerk (33) authentifiziert sind.

21. Mobiles Telekommunikationsnetz (33), das Folgendes umfasst:
Mittel zum Empfangen von Email-Nachrichten, die an einen Empfänger (25A, 35, 39, 41) adressiert sind, so dass der Empfänger ein Teilnehmer des mobilen Telekommunikationsnetzes (33) ist,
**gekennzeichnet durch**
Mittel zum Modifizieren der empfangenen Email-Nachrichten **durch** Konvertieren eines Adressteils in eine Netzwerkadresse, die zum Identifizieren des Teilnehmers in dem mobilen Kommunikationsnetz verwendet wird, um modifizierte Email-Nachrichten bereitzustellen,
Mittel zum Speichern der modifizierten Email-Nachrichten in einer Warteschlange (29), und
Mittel zum Verwenden der Netzwerkadresse im Adressteil der modifizierten Email-Nachrichten zum Weiterleiten der Email-Nachrichten von der Warteschlange (29) zum Teilnehmer (25A, 35, 39, 41) in dem mobilen Telekommunikationsnetz mit einem Paketdatenprotokoll.

22. Mobiles Telekommunikationsnetz nach Anspruch 21 mit Mitteln zum Ausführen des Verfahrens nach einem der Ansprüche 2 bis 20.

23. Verfahren nach Anspruch 1, wobei die Netzwerkadresse eine IMSI des Empfängerendgerätes umfasst und das Verfahren ferner Folgendes beinhaltet:
Empfangen der modifizierten Email am mobilen Telekommunikationsnetz (33);
Analysieren des Adressteils der Email zum Ermitteln der IMSI des Empfängerendgeräts; und
Senden eines Nachrichteninhaltsteils zum Empfänger (25A, 35, 39, 41) mit der ermittelten IMSI.

## Revendications

1. Procédé de transmission d'un courriel à un abonné d'un réseau de télécommunications mobiles (33), le procédé comprenant les opérations consistant à :
recevoir le courriel provenant d'un expéditeur (1 ; 25A ; 37) et adressé à un destinataire (25A, 35 ; 39, 41), de sorte que le destinataire est l'abonné du réseau de télécommunications mobiles (33) ;
**caractérisé par** les opérations consistant à :
modifier le courriel reçu grâce à la conversion d'une portion d'adresse en une adresse de réseau utilisée pour identifier l'abonné dans le réseau de télécommunications mobiles afin de fournir un courriel modifié,
stocker le courriel modifié dans une file d'attente (29), et
utiliser l'adresse de réseau, dans la portion d'adresse du courriel modifié, pour réacheminer le courriel modifié à partir de la file d'attente (29) vers l'abonné (25A, 35 ; 39, 41) dans le réseau de télécommunications mobiles grâce à l'utilisation d'un protocole de données en paquets.

2. Procédé selon la revendication 1, la file d'attente comprenant une mémoire non adressable, de sorte que des courriels ne sont pas adressables lorsqu'ils sont stockés dans la file d'attente.

3. Procédé selon la revendication 1 ou 2, la file d'attente (29) comprenant une file d'attente linéaire.

4. Procédé selon la revendication 1, 2 ou 3, la file d'attente (29) comprenant une file d'attente non gérée.

5. Procédé selon la revendication 1, 2, 3 ou 4, la file d'attente (29) comprenant une file d'attente « premier entré-premier sorti ».

6. Procédé selon l'une quelconque des revendications précédentes, la file d'attente (29) réacheminant des courriels au destinataire (25A, 35 ; 39, 41) en fonction de la cadence suivant laquelle le destinataire (25A, 35 ; 39, 41) peut recevoir des courriels.

7. Procédé selon l'une quelconque des revendications précédentes, la file d'attente (29) réacheminant des courriels au destinataire en fonction de la disponibilité du destinataire (25A, 35 ; 39, 41) à recevoir des messages.

8. Procédé selon l'une quelconque des revendications précédentes, le courriel étant directement réacheminé à partir de la file d'attente (29) vers le destinataire sans être maintenu dans une mémoire intermédiaire.

9. Procédé selon l'une quelconque des revendications précédentes, le courriel étant reçu de l'expéditeur et étant stocké dans la file d'attente sans être maintenu dans une mémoire intermédiaire.

10. Procédé selon l'une quelconque des revendications précédentes, comprenant l'exécution de ladite étape de modification dans le registre des positions de rattachement, HRL, (15) du réseau (33).

11. Procédé selon la revendication 1 ou 10, l'adresse de réseau comprenant l'IMSI de l'abonné.

12. Procédé selon la revendication 1, 10 ou 11, la portion d'adresse du courriel étant une adresse X500 ou similaire.

13. Procédé selon la revendication 1, 10, 11 ou 12, la portion d'adresse du courriel comportant un nom d'utilisateur et un nom de domaine.

14. Procédé selon l'une quelconque des revendications précédentes, une pluralité de dispositifs de l'abonné étant enregistrée auprès du réseau (33), et le procédé englobant le réacheminement des courriels vers un dispositif sélectionné parmi les dispositifs.

15. Procédé selon la revendication 14, le dispositif sélectionné parmi les dispositifs étant sélectionné en fonction du contenu du courriel.

16. Procédé selon la revendication 14 ou 15, le dispositif sélectionné parmi les dispositifs étant sélectionné en fonction de critères déterminés par l'abonné.

17. Procédé selon la revendication 14, 15 ou 16, englobant le changement du contenu du courriel en fonction du dispositif sélectionné parmi les dispositifs auquel il est destiné à être réacheminé.

18. Procédé selon l'une quelconque des revendications précédentes, le réseau (33) comprenant un réseau GSM.

19. Procédé selon l'une quelconque des revendications précédentes, le réseau (33) comprenant un réseau 3G ou UMTS.

20. Procédé selon l'une quelconque des revendications précédentes, l'expéditeur (1 ; 25A ; 37) et le destinataire (25A, 35 ; 39, 41) du courriel étant tous les deux abonnés au réseau (33) et étant authentifiés auprès du réseau (33).

21. Réseau de télécommunications mobiles (33) englobant :
des moyens pour recevoir des courriels adressés à un destinataire (25A, 35 ; 39, 41) de sorte que le destinataire est un abonné du réseau de télécommunications mobiles (33),
**caractérisé par**
des moyens conçus pour modifier les courriels reçus grâce à la conversion d'une portion d'adresse en une adresse de réseau utilisée pour identifier l'abonné dans le réseau de télécommunications mobiles afin de fournir des courriels modifiés,
des moyens conçus pour stocker les courriels modifiés dans une file d'attente (29), et
des moyens conçus pour utiliser l'adresse de réseau, dans la portion d'adresse des courriels modifiés, pour réacheminer les courriels à partir de la file d'attente (29) vers l'abonné (25A, 35 ; 39, 41) dans le réseau de télécommunications mobiles grâce à l'utilisation d'un protocole de données en paquets.

22. Réseau de télécommunications mobiles selon la revendication 21, englobant des moyens pour exécuter le procédé selon l'une quelconque des revendications 2 à 20.

23. Procédé selon la revendication 1, l'adresse de réseau comportant un IMSI du terminal du destinataire, et le procédé englobant en outre les opérations consistant à :
recevoir le courriel modifié au niveau du réseau de télécommunications mobiles (33) ;
analyser la portion d'adresse du courriel afin de déterminer l'IMSI du terminal du destinataire ; et
transmettre une portion de contenu de message au destinataire (25A, 35 ; 39, 41) grâce à l'utilisation de l'IMSI ayant été déterminé.
